## Europäisches Patentamt
## European Patent Office
## Office européen des brevets

(19)

(11) Veröffentlichungsnummer: **0 100 857**
**A2**

(12) # EUROPÄISCHE PATENTANMELDUNG

(21) Anmeldenummer: **83106411.8**

(22) Anmeldetag: **01.07.83**

(51) Int. Cl.³: **C 09 D 3/48**
**C 25 D 13/06**

(30) Priorität: **10.07.82 DE 3225874**

(43) Veröffentlichungstag der Anmeldung:
**22.02.84 Patentblatt 84/8**

(84) Benannte Vertragsstaaten:
**DE FR GB NL**

(71) Anmelder: **BASF Aktiengesellschaft**
**Carl-Bosch-Strasse 38**
**D-6700 Ludwigshafen(DE)**

(72) Erfinder: **Gulbins, Erich, Dr.**
**80 Ladenburger Strasse**
**D-6900 Heidelberg(DE)**

(72) Erfinder: **Kempter, Fritz Erdmann, Dr.**
**L 2,14**
**D-6800 Mannheim(DE)**

(72) Erfinder: **Gimpel, Juergen, Dr.**
**Osloer Weg 44**
**D-6700 Ludwigshafen(DE)**

(54) **Lackbindemittel und deren Verwendung.**

(57) Die Erfindung betrifft Lackbindemittel auf Basis eines mit einer Säure wasserverdünnbaren stickstoffbasischen Harzes, wobei das Lackbindemittel aus

(A) einem stickstoffbasischen Harz und

(B) einem Ester einer aromatischen Di- oder Polycarbonsäure mit einem Molekulargewicht unter 500 besteht.

Das erfindungsgemäße Lackbindemittel eignet sich als Bindemittel für die kathodische Elektrotauchlackierung metallischer Gegenstände.

EP 0 100 857 A2

## Lackbindemittel und deren Verwendung

Die vorliegende Erfindung betrifft Lackbindemittel auf Basis stickstoffbasische Gruppen tragender Polyadditions-, Polykondensations- oder Polymerisationsprodukte, die durch Zusatz von Säuren wasserverdünnbar sind, mit einem speziellen Zusatz sowie deren Verwendung für die Elektrotauchlackierung.

Bindemittel für kathodische Elektrotauchlacke sind bekannt und werden in der Literatur (s. z.B. H.U. Schenck, H.Spoor und M.Marx, Progress in Organic Coatings 7 (1979), S. 1-77) ausführlich beschrieben. Zur Verbesserung des Verlaufs dieser Lacke werden ihnen häufig Hochsieder wie Isodecanol, Butylglykol oder Hexylglykolacetat zugesetzt. Der Zusatz dieser Hochsieder bedingt jedoch einen Abfall der Abscheidespannung der Elektrotauchlacke und verschlechtert dadurch den Umgriff.

Kationische Elektrotauchlacke, die als Vernetzer einen nicht sauren Polyester enthalten, werden in der DE-OS 29 36 356 und der EP-4 090 beschrieben. Die in diesen Druckschriften angeführten Polyester weisen jedoch mittlere Molekulargewichte zwischen 500 und 5 000 auf und ergeben noch keine genügende Verlaufsverbesserung.

Ein nicht saurer Polyester als Vernetzer für kationische Elektrotauchlacke wird auch in der EP 12 463 beschrieben. Diese Bindemittelmischungen benötigen jedoch für eine ausreichende Vernetzung als Umesterungskatalysator ein Metallsalz bzw. einen Metallsalzkomplex, der im Laufe der Badalterung einen Anstieg der Leitfähigkeit und einen Abfall des Umgriffs bedingt. Eine Vernetzung der Bindemittelmischung gemäß der EP 12 463 gelingt auch nur durch Verwendung der 2-Hydroxyester-Funktionen des Polyester.

Ls/P

Der vorliegenden Erfindung lag die Aufgabe zugrunde, Lackbindemittel für die kathodische Elektrotauchlackierung aufzuzeigen, die Überzüge mit einem verbesserten Verlauf und gleichzeitig gutem Umgriff ergeben, ohne daß ein Polyester mit labilen 2-Hydroxyesterfunktionen verwendet wird.

Es wurde gefunden, daß sich Elektrotauchlackbindemittel auf Basis eines stickstoffbasische Gruppen enthaltenden organischen Harzes und eines aromatischen Di- oder Polycarbonsäureesters herstellen lassen, deren Filme einen sehr guten Verlauf aufweisen. Überraschenderweise besitzen diese Lacke eine höhere Spannungsfestigkeit, einen wesentlich verbesserten Umgriff und eine höhere Härte bei gleichbleibender Elastizität als die Lacke der entsprechenden Bindemittel ohne aromatischen Di- oder Polycarbonsäureester.

Gegenstand der vorliegenden Erfindung ist ein Lackbindemittel auf Basis stickstoffbasische Gruppen tragender Polyadditions-, Polykondensations- oder Polymerisationsprodukte, die durch Zusatz von Säuren wasserverdünnbar sind, das dadurch gekennzeichnet ist, daß das Lackbindemittel besteht aus

(A)   60 bis 99 Gew.-% eines stickstoffbasische Gruppen tragenden Polyadditions-, Polykondensations- oder Polymerisationsprodukts und

(B)   1 bis 40 Gew.-% eines Esters einer aromatischen Di- oder Polycarbonsäure mit einem Molekulargewicht unter 500.

Komponente (B) ist vorzugsweise ein Ester einer aromatischen Di- oder Polycarbonsäure mit einem 1 bis 8 Kohlenstoffatome enthaltenden Monoalkohol.

Gegenstand der vorliegenden Erfindung ist außerdem die Verwendung des Lackbindemittels als Bindemittel für die kathodische Elektrotauchlackierung metallischer Gegenstände.

Der aus dem Bindemittel hergestellte Elektrotauchlack enthält im allgemeinen 5 bis 20 Gew.-% der protonierten erfindungsgemäßen Bindemittelmischung.

Zu den Aufbaukomponenten der erfindungsgemäßen Bindemittelmischung ist im einzelnen folgendes auszuführen:

(A)   Als stickstoffbasische Gruppen tragende Polyadditions-, Polykondensations- bzw. Polymerisationsprodukte (A), die durch Zusatz von Säuren wasserverdünnbar sind, kommen im allgemeinen stickstoffhaltige Polyacrylatharze in Betracht, wie sie z.B. in den US-PS 3 446 723, US-PS 3 454 482, US-PS 3 455 806, US-PS 3 458 420, US-PS 3 729 435 und der US-PS 3 703 596 sowie in DE-OS 2 924 756 und DE-OS 30 17 603 sowie in der deutschen Patentanmeldung P 31 33 770.8 beschrieben werden. Als Komponente (A) können ebenfalls mannichmodifizierte aromatische Epoxidphenolharze verwendet werden, wie sie in DE-OS 23 57 063, DE-OS 24 19 179, DE-OS 25 41 801, DE-OS 25 54 080 sowie in den deutschen Patentanmeldungen P 31 24 088.7 und P 31 23 968.4 beschrieben sind.

Weiterhin können als Komponente (A) acrylamidomodifizierte aromatische Epoxidphenolharze verwendet werden, wie sie in der DE-OS 29 42 488 beschrieben werden. Als Komponente (A) können auch verkappte Isocyanatgruppen enthaltende kationische Harze, wie in der DE-OS 28 45 988 beschrieben, verwendet werden. Selbstverständlich können als Komponente (A) auch Mischungen dieser Bindemitteltypen verwendet werden. All diesen Bindemitteln ist gemeinsam, daß sie über freie Hydroxylgruppen- und/oder primäre, sekundäre oder tertiäre Aminogruppen verfügen und mit Säuren unter Salzbildung wasserverdünnbar werden.

Komponente (A) ist in der erfindungsgemäßen Lackbindemittelmischung in einer Menge von 60 bis 99 Gew.-%, vorzugsweise 70 bis 95 Gew.-%, enthalten.

(B) Als Ester einer aromatischen Di- oder Polycarbonsäure mit einem Molekulargewicht unter 500 (B) eignen sich beispielsweise Ester aromatischer Dicarbonsäuren wie Phthalsäure, Isophthalsäure, Terephthalsäure, Tricarbonsäuren wie Trimellithsäure, Hemimellithsäure, Trimesinsäure, Tetracarbonsäuren wie Benzol--1,2,3,4-tetracarbonsäure, Prehnitsäure, Pyromellithsäure und Hexacarbonsäuren wie Mellithsäure. Zur Herstellung der Di- und Polycarbonsäureester können auch die Anhydride der genannten Polycarbonsäuren verwendet werden. Als zur Veresterung dieser Di- und Polycarbonsäuren geeignete Monoalkohole mit 1 bis 8 Kohlenstoffatomen können z.B. Methanol, Ethanol, Propanol, Isopropanol, Butanol, Isobutanol, t-Butanol usw. oder auch Glykolether, wie Methylglykol, Ethylglykol, Butylglykol und Alkyldiglykolether wie Methyldiglykol, Ethyldiglykol und Butyldiglykol verwendet werden. Es können auch Mischungen der genannten Monoalkohole verwendet werden. Bevorzugt als Komponente (B) sind die Umsetzungsprodukte von Trimellithsäure mit C-1 bis C-3-Monoalkoholen. Besonders bevor-

zugt sind Trimellithsäuretrimethylester und Dimethylterephthalat.

Komponente (B) ist in einer Menge von 1 bis 40 Gew.-%,
vorzugsweise 5 bis 30 Gew.-% in der erfindungsgemäßen
Lackbindemittelmischung enthalten.

Die erfindungsgemäße Lackbindemittelmischung wird durch
zumindest teilweise Salzbildung mit Säuren wasserlöslich
bzw. wasserdispergierbar gemacht, d.h. zumindest teilweise
mit Säuren neutralisiert. Als Neutralisationsmittel können
organische und anorganische Säuren dienen. Bevorzugt sind
Essigsäure, Milchsäure und Gluconsäure. Der Neutralisationsgrad für die Anwendungen der erfindungsgemäßen Bindemittelmischungen im wäßrigen Medium liegt zwischen 10 und
120 %.

Dem erfindungsgemäßen Bindemittelgemisch können zu seiner
Anwendung noch Pigmente, wie z.B. Titandioxid, Talkum und
Ruß, je nach Anwendungszweck in Mengen von 10 bis 80,
vorzugsweise 20 bis 65 Gew.-%, bezogen auf 100 Gew.-Teile
Bindemittelmischung, darüber hinaus anorganische und
organische Buntpigmente in Mengen von bis zu 5 Gew.-Teilen
sowie Füllstoffe in Mengen von ebenfalls bis zu 5 Gew.-Teilen zugefügt werden. Hochsieder können bis zu 10 Teilen,
Wachse zur Erhöhung der Kratzfestigkeit bis zu 10 Teilen,
sowie Vernetzungskatalysatoren, wie verkappte Säuren wie
Trikresylphosphat bis zu 5 Teilen, jeweils bezogen auf
100 Teile Bindemittelmischung mitverwendet werden.

Die erfindungsgemäße Lackbindemittelmischung wird insbesondere für die kathodische Elektrotauchlackierung metallischer Gegenstände z.B. auf Eisen, Stahl und Aluminium
verwendet.

Die Herstellung der kationischen Elektrotauchlackbäder und deren Verarbeitung erfolgt wie üblich, beispielsweise wie in W.Machu, Elektrotauchlackierung (1974) S.155 ff beschrieben. Der Feststoffgehalt der Elektrotauchlackbäder liegt im allgemeinen zwischen 5 und 25 Gew.-%, der pH-Wert zwischen 3 und 8,5.

Die mit den erfindungsgemäßen Bindemittelmischungen hergestellten Lacke weisen einen guten Verlauf, eine hohe Abscheidespannung, ein sehr gutes Härteelastizitätsverhältnis und einen guten Umgriff auf.

Die in den Beispielen genannten Teile und Prozente sind, soweit nicht anders angegeben, Gewichtsteile bzw. Gewichtsprozente.

Beispiel 1

a)    Bindemittel

Zu einer Vorlage aus 30 % des Zulaufs 1 wurde der Zulauf 1, bestehend aus 8170 Teilen Epikote-1001-Allylethermonoacrylat gemäß deutscher Patentanmeldung P 31 33 770.8 (Komponente C 4), 2100 Teilen 2-Ethylhexylacrylat, 4000 Teilen des Addukts aus Vinylisocyanat und Caprolactam gemäß deutscher Patentanmeldung P 31 33 770.8 (Komponente B 3), 900 Teilen Dimethylaminopropylmethacrylamid, 210 Teilen 2-Mercaptoethanol und 200 Teilen Azobisisobutyronitril in 3 Stunden bei 80°C zudosiert. Es wurde 1 Stunde bei 80°C nachpolymerisiert, dann wurden 50 Teile Azobisisobutyronitril zugegeben und wiederum 2 Stunden nachpolymerisiert. Nach Zugabe von 1320 Teilen Isodecanol wurde der Ansatz nach 30 Minuten auf Raumtemperatur abgekühlt und das entstandene

Copolymerisat durch folgende Daten charakterisiert:

Feststoffgehalt = 59,1 %
Aminzahl/100%ig = 29,2
K-Wert (3%ig in Eisessig) = 22,1
55%ige Höppler-Viskosität
in Ethylacetat bei 20°C   = 2800 mPas.

b)   Lack

127 Teile der Lackharzlösung wurden mit 0,7 Teilen Essigsäure neutralisiert. Durch langsame Zugabe von 500 Teilen Wasser wurde eine Dispersion hergestellt. Nach Zugabe von 45 Teilen Titandioxid vom Rutiltyp wurde die Mischung über Nacht mit Porzellan-Kugeln auf dem Rollstuhl dispergiert. Nach Abfiltration der Kugeln wurde die Mischung mit entionisiertem Wasser auf 1000 Teile aufgefüllt. Mit diesem Elektrotauchlack wurden kathodisch geschaltete, zinkphosphatierte Bleche beschichtet.

Dieser Lack dient als Vergleichsbeispiel (ohne Zusatz von aromatischem Polycarbonsäureester).

Beispiel 2

Aus dem Lack von Beispiel 1b) und 5 Teilen Trimellithsäuretrimethylester wurde, wie bei 1b) beschrieben, ein kationischer Weißlack hergestellt.

Beispiel 3

Aus dem Lack von Beispiel 1b) und 10 Teilen Trimellithsäuretrimethylester wurde, wie bei 1b) beschrieben, ein kationischer Weißlack hergestellt.

Verwendet man anstatt Trimellithsäuretrimethylester Dimethylterephthalat, dann erhält man einen Weißlack mit analogen Eigenschaften.

Beispiel 4

Aus dem Lack von Beispiel 1b) und 20 Teilen Trimellithsäuretrimethylester wurde, wie bei 1b) beschrieben, ein kationischer Weißlack hergestellt.

Beispiel 5

Aus dem Lack von Beispiel 1b) und 30 Teilen Trimellithsäuretrimethylester wurde, wie bei 1b) beschrieben, ein kationischer Weißlack hergestellt.

Tabelle 1

| Beispiel Nr. | 1 Vergl. Beisp. | 2 | 3 | 4 | 5 |
|---|---|---|---|---|---|
| Abscheidespannung [V] | 55 | 130 | 130 | 90 | 90 |
| Schichtdicke [μm] | 20 | 20 | 20 | 20 | 20 |
| Pendelhärte[1] [sec] | 140 | 170 | 170 | 171 | 175 |
| ErichsenTiefung[2] [mm] | 4,0 | 5,5 | 5,0 | 5,0 | 5,5 |
| 60°-Glanz[3] [%] | 32 | 50 | 57 | 60 | 71 |
| Verlauf[4] | 2 | 1 | 1 | 0 | 0 |
| Umgriff [%] | 20 | 30 | 30 | 25 | 25 |
| Korrosionsschutz[5] [mm-Unterwanderung] nach 10 Tagen | 18 | 16 | 18 | 18 | 18 |

1)   gemäß DIN 53 157
2)   gemäß DIN 53 156
3)   gemäß DIN 67 530
4)   Benotung von 0 - 5

         0   glatt, ausgespannt

         5   rauh wie Schmirgelpapier

5)   gemäß DIN 53 167

## Beispiel 6

a)   Harzlösung I

al)   Vorprodukt 1

Zu einer Mischung aus 4540 Teilen eines Cumaron-Inden-Phenolharzes, 480 Teilen Phenol,
1890 Teilen Acrylamid, 1110 Teilen Paraformaldehyd, 3,2 Teilen Tris [N-Cyclohexyl-diazenium-
dioxi-] aluminium, z.B. ®Xyligen AL und 1260 Teilen Toluol wurden bei 60°C  8,75 Teile $BF_3$-Di-
ethyletheratlösung zugegeben. Nach 30 Minuten
wurden wiederum 8,75 Teile $BF_3$-Lösung hinzugegeben und nach weiteren 30 Minuten erfolgte die
dritte $BF_3$-Zugabe. Man ließ 3 Stunden bei 60°C
reagieren und destillierte dann bei 100°C in
Vakuum das entstandene Wasser ab, gab 2800 Teile
Diethanolamin hinzu und ließ 2 Stunden bei 90°C
reagieren. Dann wurde mit Ethylglykol und Butylglykol auf 57,3 % Feststoffgehalt verdünnt.

a2)   Vorprodukt 2

2210 Teile Dimerfettsäure (z.B. ®Pripol 1014 der
Fa. Unichema) wurden mit 790 Teilen Aminoethylethanolamin versetzt und bei 200°C während 3 Stunden miteinander umgesetzt.

a3) Reaktionsprodukt aus al) und a2):

Eine Mischung aus 7630 Teilen des Vorprodukts al), 2200 Teilen Bisphenol A, 790 Teilen Paraformaldehyd, 1990 Teilen Dibutylamin, 2980 Teilen Vorprodukt a2), 600 Teilen Isopropanol, 1000 Teilen Isodecanol, 320 Teilen Toluol, 280 Teilen Ethylglykol und 280 Teilen Butylglykol wurde bei 80°C mit 4290 Teilen Epikote 1004, 2940 Teilen Toluol, 650 Teilen Isopropanol, 1990 Teilen Epikote 1001, 2780 Teilen Epikote 828, 1350 Teilen Ethylglykol und 180 Teilen Dimethylethanolamin versetzt. Man ließ 8 Stunden bei 80°C reagieren, gab dann 330 Teile 2-Mercaptoethanol hinzu und ließ abkühlen. Die entstandene Harzlösung wird durch folgende Daten charakterisiert:

Feststoffgehalt = 65,6 %
Aminzahl/100%ig = 98,8
K-Wert = 22,4
55%ige Höppler-Viskosität
(in Toluol/Ethylglykol = 1/2) = 2300 mPas.

b) Harzlösung II

b1) Vorprodukt 1

Zu einer Mischung aus 923 Teilen Acrylamid, 429 Teilen Paraformaldehyd, 940 Teilen Phenol, 7,5 Teilen Tris [N-Cyclohexyl-diazeniumdioxi] aluminium und 0,2 Teilen Kupferpulver wurden bei 60°C 10 Teile BF$_3$-Diethyletheratlösung zugegeben. Nach 1 Stunde wurden weitere 10 Teile BF$_3$-Lösung zugegeben und 3 Stunden bei 60°C nachreagieren lassen. Dann wurde bei 100°C unter Vakuum das entstandene Wasser abdestilliert und die Lösung mit 200 Teilen Isobutanol und 600 Teilen Toluol verdünnt. Die entstandene Harzlösung hatte einen Feststoffgehalt von 66,5 %.

b2) Reaktionsprodukt aus b1) und a2):

Zu einer Mischung aus 5215 Teilen Vorprodukt b1), 850 Teilen Diethanolamin, 2040 Teilen Vorprodukt a2), 6,8 Teilen Tris[N-Cyclohexyl-diazeniumdioxi]aluminium und 3,4 Teilen Di-tert.-butylkresol wurden bei 70°C 4794 Teile Epikote 828, 92 Teile Methylethanolamin und 1972 Teile Isopropanol zugegeben. Man ließ 2 Stunden bei 70°C und 1 Stunde bei 85°C reagieren und gab dann 272 Teile Essigsäure und 1700 Teile Wasser hinzu. Nach 30 Minuten wurden 34 Teile Hydrochinonmonomethylether zugesetzt. Die entstandene Harzlösung wird durch folgende Daten charakterisiert:

Feststoffgehalt = 68,1 %
K-Wert          = 22,6
55%ige Höppler-Viskosität
in Isobutanol/Isopropanol (1:1) = 1250 mPas.

c)  Lack

114 Teile Harzlösung a3) und 37 Teile Harzlösung b2) wurden mit 4,0 Teilen Essigsäure neutralisiert und

dann mit vollentionisiertem Wasser langsam auf 1000 Teile aufgefüllt. Mit diesem Elektrotauchlack wurden kathodisch geschaltete zinkphosphatierte Bleche beschichtet. Dieser Lack dient als Vergleichsbeispiel ohne Zusatz von aromatischen Polycarbonsäureestern.

Beispiel 7

Aus dem Lack von Beispiel 6c und 5 Teilen Trimellithsäuretrimethylester wurde, wie bei 6c) beschrieben, ein kationischer Klarlack hergestellt.
Verwendet man anstatt Trimellithsäuretrimethylester Dimethylterephthalat, dann erhält man einen Lack mit analogen Eigenshaften.

Beispiel 8

Aus dem Lack von Beispiel 6c) und 10 Teilen Trimellithsäuretrimethylester wurde, wie bei 6c) beschrieben, ein kationischer Klarlack hergestellt.

Beispiel 9

Aus dem Lack von Beispiel 6c) und 20 Teilen Trimellithsäuretrimethylester wurde, wie bei 6c) beschrieben, ein kationischer Klarlack hergestellt.

Beispiel 10

Aus dem Lack von Beispiel 6c) und 30 Teilen Trimellithsäuretrimethylester wurde, wie bei 6c) beschrieben, ein kationischer Klarlack hergestellt.

Tabelle 2

| Beispiel Nr. | | 6 Vergl. Beisp. | 7 | 8 | 9 | 10 |
|---|---|---|---|---|---|---|
| Abscheidespannung | [V] | 100 | 180 | 130 | 130 | 150 |
| Schichtdicke | [μm] | 17 | 17 | 17 | 17 | 17 |
| Pendelhärte | [sec] | 200 | 220 | 220 | 220 | 230 |
| Erichsen-Tiefung | [mm] | 10 | 10 | 10 | 10 | 10 |
| $60^{o}$-Glanz | [%] | 80 | 90 | 90 | 85 | 98 |
| Verlauf | | 2 | 1 | 1 | 0 | 0 |
| Umgriff | [%] | 31 | 50 | 40 | 40 | 46 |
| Korrosionsschutz nach 20 d [mm-Unterwanderung] | | 6,0 | 2,5 | 3,5 | 4,0 | 6,0 |

Patentansprüche

1. Lackbindemittel auf Basis stickstoffbasische Gruppen tragender Polyadditions-, Polykondensations- oder Polymerisationsprodukte, die durch Zusatz von Säuren wasserverdünnbar sind, dadurch gekennzeichnet, daß das Lackbindemittel besteht aus

(A) 60 bis 99 Gew.-% eines stickstoffbasische Gruppen tragenden Polyadditions-, Polykondensations- oder Polymerisationsprodukts und

(B) 1 bis 40 Gew.-% eines Esters einer aromatischen Di- oder Polycarbonsäure mit einem Molekulargewicht unter 500.

2. Lackbindemittel nach Anspruch 1, dadurch gekennzeichnet, daß die Komponente (B) ein Ester einer aromatischen Di- oder Polycarbonsäure mit einem 1 bis 8 Kohlenstoffatome enthaltenden Monoalkohol ist.

3. Lackbindemittel nach Anspruch 1 oder 2, dadurch gekennzeichnet, daß die Komponente (B) Trimellithsäuretrimethylester und/oder Terephthalsäuredimethylester ist.

4. Lackbindemittel nach einem der vorhergehenden Ansprüche, dadurch gekennzeichnet, daß es aus 70 bis 95 Gew.% der Komponente (A) und 5 bis 30 Gew.% der Komponente (B) besteht.

5. Verwendung des Lackbindemittels nach einem der vorhergehenden Ansprüche als Bindemittel für die kathodische Elektrotauchlackierung metallischer Gegenstände.